# EUROPÄISCHE PATENTSCHRIFT

(11) **EP 4 611 988 B1**
(45) Veröffentlichungstag und Bekanntmachung des Hinweises auf die Patenterteilung: **12.08.2026**
(21) Anmeldenummer: 23762419.2
(22) Anmeldetag: 29.08.2023
(51) Int. Cl.: B65G 47/76, B30B 11/08, B65G 11/20, B65G 11/02, B65G 11/00, B30B 11/00, B30B 15/32

(54) **AUSLAUFRUTSCHE FÜR EINE TABLETTENPRESSE, EIN AUSLAUFSYSTEM FÜR EINE TABLETTENPRESSE UND EINE TABLETTENPRESSE UMFASSEND EINE ENTSPRECHENDE AUSLAUFRUTSCHE ODER EIN ENTSPRECHENDES AUSLAUFSYSTEM**
DISCHARGE CHUTE FOR A TABLET PRESS, A DISCHARGE SYSTEM FOR A TABLET PRESS AND A TABLET PRESS COMPRISING A CORRESPONDING DISCHARGE CHUTE OR A CORRESPONDING DISCHARGE SYSTEM
GOULOTTE D'ÉVACUATION POUR UNE PRESSE À COMPRIMÉS, SYSTÈME D'ÉVACUATION POUR UNE PRESSE À COMPRIMÉS ET PRESSE À COMPRIMÉS COMPRENANT UNE GOULOTTE D'ÉVACUATION CORRESPONDANTE OU UN SYSTÈME D'ÉVACUATION CORRESPONDANT

(30) Priorität: 04.11.2022 DE 102022129223
(43) Veröffentlichungstag der Anmeldung: 10.09.2025
(73) Patentinhaber: Syntegon Technology GmbH, 70372 Stuttgart (DE)
(72) Erfinder: WERNER, Fabian, 71336 Waiblingen (DE); WETTERAUER, Till Bastian, 71334 Waiblingen (DE); GRASS, Torsten, 73660 Urbach (DE)
(74) Vertreter: Novagraaf Group
(86) Internationale Anmeldenummer: PCT/EP2023/073616
(87) Internationale Veröffentlichungsnummer: WO 2024/094339

(56) Entgegenhaltungen:
- DE-A1- 102018 116 143
- US-A1- 2011 233 027
- US-A1- 2021 154 959
- US-A1- 2021 370 632

## Beschreibung

Die vorliegende Erfindung betrifft eine Tablettenpresse mit einer Auslaufrutsche. Außerdem betrifft die vorliegende Erfindung ein Auslaufsystem für eine Tablettenpresse. Weiterhin betrifft die vorliegende Erfindung eine Tablettenpresse umfassend ein entsprechendes Auslaufsystem.

Tablettenpressen werden beispielsweise in der pharmazeutischen Industrie, der technischen Industrie, der chemischen Industrie oder der Nahrungsmittelindustrie eingesetzt, um Tabletten bzw. Presslinge in großer Stückzahl herzustellen. Typischerweise werden Tablettenpressen in Rundläuferpressen und Exzenterpressen unterteilt, wobei Rundläuferpressen verglichen mit Exzenterpressen in der Regel die größere Produktionskapazität aufweisen. Eine Rundläuferpresse umfasst eine drehbar gelagerte Matrizenscheibe mit darin ausgebildeten Matrizenöffnungen. Jeder der Matrizenöffnungen sind jeweils ein Oberstempel und ein Unterstempel zugeordnet. Die Oberstempel und Unterstempel sind mit der Matrizenscheibe mitdrehbar. Im Zuge einer Drehung der Matrizenscheibe werden die Matrizenöffnungen mit pulverförmigen Materialien befüllt. In mindestens einer Druckeinrichtung werden die oberen und unteren Stempel in den Matrizenöffnungen gegeneinandergedrückt, um die Materialien zu Tabletten zu verpressen. Nach dem Verpressen werden die Tabletten in der Regel durch die Unterstempel aus den Matrizenöffnungen ausgestoßen und beispielsweise durch einen Abstreifer einer Auslaufrutsche der Tablettenpresse zugeführt.

In der einfachsten Form besteht die Auslaufrutsche aus einem Rutschkanal mit nur einem Tablettenauslass. Die Auslaufrutsche ragt von der Oberseite der Matrizenscheibe schräg nach unten aus der Tablettenpresse heraus.

Es sind jedoch auch solche Auslaufrutschen bekannt, deren Rutschkanal wenigstens einen ersten Tablettenauslass und einen zweiten Tablettenauslass umfasst. Dem Tabletteneinlass des Rutschkanals zugeführte Tabletten werden den unterschiedlichen Tablettenausgängen beispielsweise in Abhängigkeit von Messwerten einer Sensorik der Tablettenpresse zugeleitet. Beispielsweise werden einem der Tablettenausgänge Guttabletten zugeleitet und dem anderen der Tablettenausgänge Schlechttabletten. Um die Tabletten zu dem gewünschten Tablettenausgang zu leiten, weisen solche Auslaufrutschen typischerweise ein Stellelement auf, das zwischen einer ersten Endstellung und einer zweiten Endstellung schwenkbar ist. In der ersten Endstellung des Stellelements werden dem Tabletteneinlass des Rutschkanals zugeführte Tabletten wenigstens dem ersten Tablettenauslass zugeleitet. In der zweiten Endstellung des Stellelements werden dem Tabletteneinlass zugeführte Tabletten wenigstens dem zweiten Tablettenauslass zugeleitet. Beim Schwenken des Stellelements in die erste Endstellung wird das Stellelement in Richtung einer den Rutschkanal begrenzenden Wand geschwenkt, die im Folgenden als erste Wand bezeichnet wird. Bekannte Auslaufrutschen haben das Problem, dass Tabletten beim Schwenken des Stellelementes in die erste Endstellung zwischen dem Stellelement und der ersten Wand eingeklemmt werden können. Ein solcher "Tablettenklemmer" führt dazu, dass zwischen der ersten Wand und dem Stellelement ein Spalt verbleibt, durch den Tabletten hindurchrutschen können. Solche Tabletten werden dann nicht wie gewünscht dem ersten Tablettenausgang zugeleitet, sondern dem zweiten Tablettenausgang. Ist der zweite Tablettengang der Tablettenausgang für Guttabletten, so kann dies beispielsweise dazu führen, dass Schlechttabletten fälschlicherweise den Tablettenausgang für Guttabletten verlassen. Mitunter müssen dann sämtliche Tabletten verworfen werden, die in einem dem zweiten Tablettenausgang nachgeschalteten Sammelbehälter gesammelt sind.

Eine gattungsgemäße Auslaufrutsche ist beispielsweise aus der Offenlegungsschrift DE 10 2018 116 143 A1 bekannt. Bei dieser Auslaufrutsche liegt das Stellelement in der ersten Endstellung an der ersten Wand an. Die zuvor erwähnten Tablettenklemmer werden dadurch vermieden, dass die Bewegungsgeschwindigkeit, mit der das Stellelement in Richtung der ersten Endstellung bewegt wird, vor Erreichen der ersten Endstellung verringert wird. Eine solche Ausführung der Auslaufrutsche ist aufwendig zu implementieren. So muss beispielsweise eine Sensorik vorhanden sein, welche die aktuelle Stellung des Stellelementes erfasst. Zudem muss auch eine Antriebseinrichtung vorhanden sein, die eine gewünschte Verringerung der Bewegungsgeschwindigkeit des Stellelements ausreichend präzise umsetzen kann.

Aus der Patentschrift KR 101 614 462 B1 ist eine Auslaufrutsche bekannt, die als Stellelement eine drehbare Stellwalze umfasst. Die Stellwalze ist in einen Boden der Auslaufrutsche integriert und um eine senkrecht zu der Rutschrichtung der Auslaufrutsche ausgerichtete Drehachse drehbar. Die Stellwalze umfasst zwei Stellvorsprünge, die zum Leiten der Tabletten in den Rutschkanal der Auslaufrutsche hineinragen.

Der Erfindung liegt die Aufgabe zugrunde, eine Möglichkeit bereitzustellen, die zuvor erwähnten Tablettenklemmer mit einfachen konstruktiven Mitteln zu verhindern und die zugeführten Tabletten dem gewünschten Tablettenauslass sicher zuzuleiten.

Diese Aufgabe wird erfindungsgemäß durch eine Tablettenpresse nach Anspruch 1, durch ein Auslaufsystem nach Anspruch 12 und durch eine Tablettenpresse nach Anspruch 15 gelöst.

Die jeweiligen Unteransprüche und die Beschreibung geben vorteilhafte Varianten und Ausführungsformen an.

Erfindungsgemäß ist also eine Tablettenpresse vorgesehen, die eingerichtet ist, um Tabletten mit einer vorgegebenen Größe herzustellen. Die Größe der Tabletten wird beispielsweise durch die Form der Matrizenöffnungen in der Matrizenscheibe bestimmt. Die Tablettenpresse umfasst eine Auslaufrutsche. Die Auslaufrutsche umfasst einen Rutschkanal mit wenigstens einem Tabletteneinlass. Außerdem umfasst die Auslaufrutsche ein Stellelement, insbesondere Weichenfahne, das zwischen einer ersten Endstellung und einer zweiten Endstellung schwenkbar ist. Die erste Endstellung und die zweite Endstellung begrenzen gemeinsam den Schwenkweg des Stellelements. Dem Tabletteneinlass des Rutschkanals zugeführte Tabletten werden in der ersten Endstellung des Stellelements wenigstens einem ersten Tablettenauslass des Rutschkanals zugeleitet. Der Rutschweg zu dem zweiten Tablettenauslass ist in der ersten Endstellung vorzugsweise durch das Stellelement gesperrt. In der zweiten Endstellung des Stellelements werden die dem Tabletteneinlass zugeführten Tabletten hingegen wenigstens einem zweiten Tablettenauslass des Rutschkanals zugeleitet. Der Rutschweg zu dem ersten Tablettenauslass ist in der zweiten Endstellung vorzugsweise durch das Stellelement gesperrt. In der ersten Endstellung weist das Stellelement in Richtung einer den Rutschkanal begrenzenden ersten Wand. Insbesondere ist die erste Wand eine erste Seitenwand.

Es ist nun vorgesehen, dass in jeder Stellung des Stellelements zwischen dem Stellelement und der ersten Wand ein Durchlass gebildet ist, der größer ist als die Maximalerstreckung der durch die Tablettenpresse hergestellten Tabletten. Unter die Bezeichnung "jede Stellung" fallen die erste Endstellung, die zweite Endstellung und sämtliche dazwischenliegende Zwischenstellungen des Stellelements. Weil der Durchlass stets größer ist als die Maximalerstreckung der hergestellten Tabletten, werden Tablettenklemmer sicher vermieden. Trifft das Stellelement beim Schwenken in die erste Endstellung auf eine Tablette auf, so wird die Tablette durch das Stellelement allenfalls in Richtung der ersten Wand geschoben. Ein Einklemmen zwischen dem Stellelement und der ersten Wand ist jedoch nicht möglich, weil der Durchlass stets größer ist als die Maximalerstreckung der Tablette. Vorzugsweise umfasst die Auslaufrutsche zusätzlich zu der ersten Wand eine der ersten Wand gegenüberliegende zweite Wand bzw. zweite Seitenwand. Wird das Stellelement ausgehend von der zweiten Endstellung in die erste Endstellung geschwenkt, so wird das Stellelement in Richtung der ersten Wand geschwenkt. Wird das Stellelement ausgehend von der ersten Endstellung in die zweite Endstellung geschwenkt, so wird das Stellelement in Richtung der zweiten Wand geschwenkt.

Gemäß einer bevorzugten Ausführungsform ist vorgesehen, dass das Stellelement in der ersten Endstellung in Richtung einer insbesondere seitlichen Vertiefung der ersten Wand weist. Durch die Vertiefung ist ein Durchlass mit einer gewünschten Größe einfach zu realisieren. Vorzugsweise ragt das Stellelement in der ersten Endstellung in die Vertiefung der ersten Wand hinein. Hierdurch wird sicher vermieden, dass Tabletten auf ein freies erstes Ende des Stellelements auftreffen. Dies könnte ansonsten dazu führen, dass die Tabletten nach Auftreffen auf das freie Ende durch den Durchlass zwischen dem Stellelement und der ersten Wand zu dem zweiten Tablettenauslass gelangen, was unerwünscht ist. Zudem könnte ein Auftreffen auf das freie Ende zu einer Beschädigung der betroffenen Tablette führen. Dies ist bei Guttabletten jedenfalls unerwünscht. Sowohl bei Guttabletten als auch bei Schlechttabletten könnte es zudem zu Abplatzungen kommen, wodurch der Rutschkanal verschmutzt wird. Alternativ ragt das Stellelement in der ersten Endstellung bis an die Vertiefung heran. Dies ist beispielsweise der Fall, wenn das freie Ende des Stellelements in der ersten Endstellung auf einer gedachten Verlängerung eines Wandabschnitts angeordnet ist, welcher der Vertiefung vorgeordnet ist. Vorzugsweise ist die erste Wand eine erste Seitenwand der Auslaufrutsche. Die Vertiefung ist dann eine seitliche Vertiefung. Eine Vertiefung in einer Wand bezeichnet einen Wandrücksprung. Von dem Rutschkanal gesehen ist die Vertiefung als Einbuchtung erkennbar. Der die Vertiefung bildende Wandabschnitt der ersten Wand wird im Folgenden auch als erster Wandabschnitt bezeichnet.

Gemäß einer bevorzugten Ausführungsform ist vorgesehen, dass ein Schwenken des Stellelements über die erste Endstellung hinaus durch ein erstes Anschlagselement gesperrt ist, und/oder dass ein Schwenken des Stellelements über die zweite Endstellung hinaus durch ein zweites Anschlagselement gesperrt ist. Hierdurch wird eine sichere Festlegung der ersten Endstellung bzw. der zweiten Endstellung erreicht. Insbesondere wirkt das erste Anschlagselement bzw. das zweite Anschlagselement in der ersten Endstellung bzw. der zweiten Endstellung direkt mit dem Stellelement zusammen. Alternativ dazu wirken das erste Anschlagselement bzw. das zweite Anschlagselement in der ersten Endstellung bzw. der zweiten Endstellung mit einem Element zusammen, das mit dem Stellelement mechanisch gekoppelt ist.

Gemäß einer bevorzugten Ausführungsform ist vorgesehen, dass der Durchlass zwischen dem Stellelement und der ersten Wand in der ersten Endstellung höchstens 30 mm beträgt. Bei einem derart bemessenen Durchlass kann ein Einklemmen von handelsüblichen Tabletten sicher vermieden werden. Bevorzugt beträgt der Durchlass in der ersten Endstellung zwischen 20 mm und 30 mm, bevorzugt zwischen 15 mm und 20 mm, bevorzugt zwischen 10 mm und 15 mm, bevorzugt zwischen 5 mm und 10 mm.

Gemäß einer bevorzugten Ausführungsform ist vorgesehen, dass der erste Wandabschnitt wenigstens bereichsweise durch ein Einsetzteil gebildet ist, welches in eine Aussparung der ersten Wand eingesetzt und mit der Auslaufrutsche lösbar verbunden ist. Ist das Einsetzteil in die Aussparung eingesetzt, so bildet das Einsetzteil bzw. dessen Außenkontur die erste Wand mit. Vorzugsweise wird der erste Wandabschnitt nur bereichsweise durch das eingesetzte Einsetzteil gebildet. Es kann jedoch auch der gesamte erste Wandabschnitt durch das eingesetzte Einsetzteil gebildet sein. Das Einsetzteil bietet den Vorteil, dass der Durchlass zwischen dem Stellelement und der ersten Wand veränderbar ist, beispielsweise durch Entfernen des Einsetzteils und Einsetzen eines weiteren Einsetzteils mit einer abweichenden Außenkontur. Eine Veränderung der ersten Endstellung ist hierzu nicht notwendig. Beispielsweise wird bei Tabletten mit einer vorgegebenen ersten Größe ein anderes Einsetzteil in die Aussparung eingesetzt als bei Tabletten mit einer vorgegebenen zweiten Größe. Vorzugsweise ist das Einsetzteil durch eine lösbare Formschlussverbindung und/oder durch wenigstens ein lösbares Befestigungselement mit der Auslaufrutsche verbunden. Das Vorhandensein des Einsetzteils ist bevorzugt. Die vorteilhafte Vermeidung von Tablettenklemmern kann auch durch eine einstückige erste Wand mit einem entsprechenden Verlauf realisiert werden.

Gemäß einer bevorzugten Ausführungsform ist vorgesehen, dass sich die erste Wand, insbesondere das eingesetzte Einsetzteil, in der ersten Endstellung des Stellelements bogenförmig entlang des freien ersten Endes des Stellelements erstreckt. Durch die Bogenform wird eine vorteilhafte Führung von Tabletten erreicht. Vorzugsweise wird der sich bogenförmig entlang des freien Endes erstreckende Abschnitt der ersten Wand durch das Einsetzteil gebildet. Der bogenförmige Abschnitt ist für die Definition des Durchlasses besonders relevant, sodass die Ausbildung des bogenförmigen Abschnitts durch das Einsetzteil besonders breite Möglichkeiten im Hinblick auf eine gewünschte Anpassung des Durchlasses an verschiedene Tablettengrößen bietet.

Gemäß einer bevorzugten Ausführungsform ist vorgesehen, dass ein dem ersten Wandabschnitt vorgeordneter zweiter Wandabschnitt der ersten Wand in Rutschrichtung der Auslaufrutsche erstreckt ist, und/oder dass ein dem ersten Wandabschnitt nachgeordneter dritter Wandabschnitt der ersten Wand in Rutschrichtung der Auslaufrutsche erstreckt ist. Ist ein Element einem weiteren Element vorgeordnet, so ist das Element zwischen dem Tabletteneinlass und dem weiteren Element angeordnet. Ist ein Element einem weiteren Element nachgeordnet, so ist das weitere Element zwischen dem Tabletteneinlass und dem Element angeordnet. Durch einen in Rutschrichtung erstreckten zweiten Wandabschnitt bzw. dritten Wandabschnitt wird eine vorteilhafte Führung der Tabletten im Bereich des zweiten Wandabschnitts bzw. dritten Wandabschnitts erreicht. Vorzugsweise liegen der zweite Wandabschnitt und der dritte Wandabschnitt in einer gemeinsamen gedachten Ebene. Der zweite Wandabschnitt und der dritte Wandabschnitt können jedoch auch beide in Rutschrichtung erstreckt und bezogen auf eine senkrecht zu dem zweiten und dem dritten Wandabschnitt ausgerichtete Achse zueinander axial versetzt sein.

Gemäß einer bevorzugten Ausführungsform ist vorgesehen, dass der zweite Wandabschnitt wenigstens bereichsweise durch das Einsetzteil gebildet ist. Hierdurch kann der Durchlass zwischen dem Stellelement und dem ersten Wandabschnitt besonders präzise angepasst werden. Konkret kann durch Verlängern oder Verkürzen des durch das Einsetzteil gebildeten Bereichs des zweiten Wandabschnitts der Durchlass zwischen dem Stellelement und dem Übergang des zweiten Wandabschnitts in den ersten Wandabschnitt verringert bzw. vergrößert werden.

Vorzugsweise ist der Rutschkanal durch eine dem Stellelement nachgeordnete Trennwand in einen dem ersten Tablettenauslass zugeordneten ersten Rutschkanalteil und einen dem zweiten Tablettenauslass zugeordneten zweiten Rutschkanalteil unterteilt. Hierdurch wird vermieden, dass sich die Tabletten in einem dem Stellelement nachgeordneten Bereich des Rutschkanals vermischen. Vorzugsweise ist ein Durchlass zwischen dem Stellelement und der Trennwand in jeder Stellung des Stellelements kleiner als die Minimalgröße der durch die Tablettenpresse hergestellten Tabletten. Hierdurch wird die Vermischung der Tabletten besonders wirksam vermieden. Vorzugsweise fluchtet die Trennwand in der zweiten Endstellung des Stellelements mit dem Stellelement.

Vorzugsweise umfasst die Auslaufrutsche einen senkrecht zu der ersten Wand erstreckten Boden. Bei einem senkrecht zu der ersten Wand erstreckten Boden kann ein geeignetes Stellelement konstruktiv einfach realisiert werden. Beispielsweise wird ein rechteckiges Stellelement eingesetzt. Vorzugsweise weist der Rutschkanal einen rechteckigen Querschnitt auf.

Gemäß einer bevorzugten Ausführungsform ist vorgesehen, dass die Auslaufrutsche eine pneumatische Antriebseinrichtung zum Schwenken des Stellelements umfasst. Eine solche Antriebseinrichtung geht mit geringen Herstellungskosten für die Auslaufrutsche einher. Mitunter sind Zwischenstellungen des Stellelements zwischen den beiden Endstellungen mittels einer pneumatischen Antriebseinrichtung nicht präzise einstellbar. In Anbetracht der Funktionsweise der erfindungsgemäßen Auslaufrutsche ist dies jedoch auch nicht notwendig. Die beiden Endstellungen des Stellelements sind mittels der pneumatischen Antriebseinrichtung jedenfalls zuverlässig und schnell einstellbar. Vorzugsweise umfasst die pneumatische Antriebseinrichtung einen Drehzylinder mit einer Abtriebswelle, wobei das Stellelement auf der Abtriebswelle drehfest angeordnet ist. Wie zuvor erwähnt wurde, können die Anschlagselemente mit einem Element zusammenwirken, mit dem das Stellelement mechanisch gekoppelt ist. Insbesondere wird durch die Anschlagselemente eine Drehung eines Schwenkflügels in dem Drehzylinder begrenzt.

Gemäß einer bevorzugten Ausführungsform ist vorgesehen, dass der Rutschkanal einen dritten Tablettenauslass umfasst, wobei dem Tabletteneinlass zugeführte Tabletten in der ersten Endstellung wahlweise dem ersten Tablettenauslass oder dem dritten Tablettenauslass zugeleitet werden, und/oder wobei dem Tabletteneinlass zugeführte Tabletten in der zweiten Endstellung wahlweise dem zweiten Tablettenauslass oder dem dritten Tablettenauslass zugeleitet werden. Durch den dritten Tablettenauslass kann die Funktionalität der Auslaufrutsche weiter erhöht werden. Konkret kann der dritte Tablettenauslass beispielsweise für eine Probeentnahme, also eine Stichprobenuntersuchung von Tabletten, genutzt werden. Vorzugsweise umfasst die Auslaufrutsche ein dem Stellelement nachgeordnetes weiteres Stellelement, insbesondere weitere Weichenfahne, das die Tabletten in Abhängigkeit von seiner Stellung wahlweise dem ersten Tablettenauslass oder dem dritten Tablettenauslass bzw. dem zweiten Tablettenauslass oder dem dritten Tablettenauslass zuleitet. Besonders bevorzugt ist die Auslaufrutsche derart ausgebildet, dass dem Tabletteneinlass zugeführte Tabletten in der ersten Endstellung des Stellelements wahlweise dem ersten Tablettenauslass oder dem dritten Tablettenauslass zugeleitet werden.

Die zu lösende Aufgabe wird auch durch ein Auslaufsystem für eine Tablettenpresse, insbesondere Rundläuferpresse, gelöst.

Ein erfindungsgemäßes Auslaufsystem umfasst einen Rutschkanal mit wenigstens einem Tabletteneinlass und ein Stellelement, insbesondere Weichenfahne, das zwischen einer ersten Endstellung und einer zweiten Endstellung schwenkbar ist. Dem Tabletteneinlass zugeführte Tabletten werden in der ersten Endstellung des Stellelements wenigstens einem ersten Tablettenauslass des Rutschkanals zugeleitet. In der zweiten Endstellung des Stellelements werden dem Tabletteneinlass zugeführte Tabletten wenigstens einem zweiten Tablettenauslass des Rutschkanals zugeleitet. Der Rutschkanal wird bereichsweise durch eine erste Wand der Auslaufrutsche begrenzt, wobei die erste Wand eine Aussparung umfasst. Bevorzugt ist die erste Wand eine erste Seitenwand.

Das Auslaufsystem umfasst außerdem wenigstens ein Einsetzteil, das in die Aussparung einsetzbar ist. Ist das Einsetzteil in die Aussparung eingesetzt, so bildet das Einsetzteil bzw. dessen Außenkontur die erste Wand mit.

Außerdem ist vorgesehen, dass das Stellelement in der ersten Endstellung in Richtung des eingesetzten Einsetzteils weist, und dass bei eingesetztem Einsetzteil in jeder Stellung des Stellelements ein Durchlass zwischen dem Stellelement und der ersten Wand gebildet ist. Weil in jeder Stellung des Stellelementes der Durchlass zwischen der ersten Wand und dem Stellelement vorhanden ist, können Tablettenklemmer wirksam vermieden werden, wie zuvor bereits ausgeführt. Das Einsetzteil ermöglicht es weiterhin, den Durchlass zwischen dem Stellelement und der ersten Wand zu variieren, beispielsweise durch Ersetzen des Einsetzteils durch ein weiteres Einsetzteil mit einer abweichenden Außenkontur. Vorzugsweise bildet das Einsetzteil die erste Wand derart mit, dass die erste Wand im Bereich des Einsetzteils eine Vertiefung umfasst. Das Stellelement weist dann in der ersten Endstellung in Richtung der Vertiefung. Vorzugsweise ragt das Stellelement in die Vertiefung hinein oder bis an die Vertiefung heran. Hierdurch kann vermieden werden, dass Tabletten auf ein freies erstes Ende des Stellelements auftreffen. Der die Vertiefung bildende Wandabschnitt der ersten Wand wird im Folgenden auch als erster Wandabschnitt bezeichnet. Vorzugsweise wird der erste Wandabschnitt nur bereichsweise durch das eingesetzte Einsetzteil gebildet. Der erste Wandabschnitt kann jedoch auch insgesamt durch das eingesetzte Einsetzteil gebildet sein. Vorzugsweise beträgt der Durchlass bei eingesetztem Einsetzteil in der ersten Endstellung des Stellelements höchstens 30 mm, bevorzugt zwischen 20 mm und 30 mm, bevorzugt zwischen 15 mm und 20 mm, bevorzugt zwischen 10 mm und 15 mm, bevorzugt zwischen 5 mm und 10 mm.

Vorteile und Weiterbildungsmöglichkeiten der Auslaufrutsche sind als ebenso in Bezug auf das Auslaufsystem beschrieben zu verstehen und umgekehrt sind Vorteile und Weiterbildungsmöglichkeiten des Auslaufsystems als ebenso in Bezug auf die Auslaufrutsche beschrieben zu verstehen.

Gemäß einer bevorzugten Ausführungsform ist vorgesehen, dass das Auslaufsystem wenigstens ein weiteres Einsetzteil umfasst, wobei wahlweise das Einsetzteil oder das weitere Einsetzteil in die Aussparung einsetzbar ist, und wobei der Durchlass zwischen dem Stellelement und der ersten Wand bei eingesetztem Einsetzteil anders ist als bei eingesetztem weiteren Einsetzteil. Hierdurch wird eine vorteilhafte Anpassung der Auslaufrutsche an die Größe der hergestellten Tabletten erreicht. Vorzugsweise umfasst das Auslaufsystem mehrere weitere Einsetzteile, die sich jeweils in ihrer Außenkontur voneinander unterscheiden.

Vorzugsweise umfasst das Auslaufsystem ein weiteres Einsetzteil, das derart ausgebildet ist, dass bei eingesetztem weiteren Einsatzteil das Stellelement in der ersten Endstellung an dem eingesetzten weiteren Einsetzteil anliegt. Bei herkömmlichen Auslaufrutschen ist in der Regel eine Anlage des Stellelements an einer Wand der Auslaufrutsche in der ersten Endstellung vorgesehen. Tablettenklemmer werden bei einer solchen Auslaufrutsche zwar nicht sicher vermieden. Ein entsprechendes weiteres Einsetzteil bietet jedoch den Vorteil, dass eine Auslaufrutsche mit der herkömmlichen Funktionsweise dennoch erhalten werden kann, wenn dies gewünscht ist. Durch ein entsprechendes weiteres Einsetzteil wird also das Einsatzfeld des Auslaufsystems erweitert.

Die zu lösende Aufgabe wird auch durch eine Tablettenpresse, insbesondere Rundläuferpresse, gelöst, die eingerichtet ist, um Tabletten mit einer vorgegebenen Größe herzustellen. Die Tablettenpresse umfasst ein Auslaufsystem mit den oben beschriebenen Merkmalen.

Hinsichtlich der mit der Tablettenpresse erzielbaren Vorteile wird auf die diesbezüglichen Ausführungen zur Auslaufrutsche bzw. zum Auslaufsystem verwiesen. Zur weiteren Ausgestaltung der Tablettenpresse können die im Zusammenhang mit der Auslaufrutsche bzw. dem Auslaufsystem beschriebenen Merkmale dienen.

Die Erfindung wird im Folgenden anhand der Figuren näher beschrieben, wobei gleiche oder funktional gleiche Elemente gegebenenfalls lediglich einmal mit Bezugszeichen versehen sind. Die Beschreibung dient als Beispiel und ist nicht einschränkend zu verstehen. Es zeigen
- Fig. 1: eine Tablettenpresse;
- Fig. 2: eine Auslaufrutsche mit einem Einsetzteil;
- Fig. 3: eine weitere Ansicht der in Figur 2 dargestellten Auslaufrutsche;
- Fig. 4: verschiedene Einsetzteile für die Auslaufrutsche;
- Fig. 5: die Auslaufrutsche mit einem weiteren Einsetzteil;
- Fig. 6: die Auslaufrutsche mit einem weiteren Einsetzteil und
- Fig. 7: die Auslaufrutsche mit einem weiteren Einsetzteil.

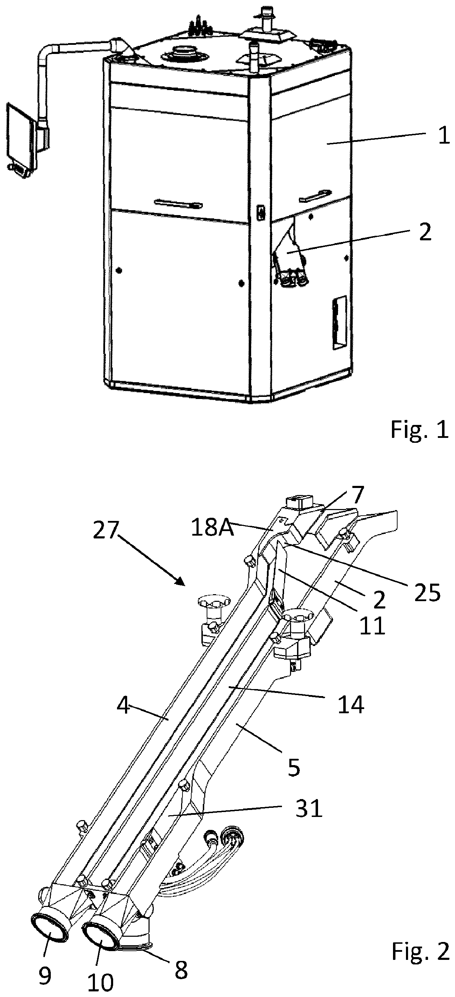

Figur 1 zeigt eine perspektivische Darstellung einer Tablettenpresse 1. Die Tablettenpresse 1 ist vorliegend als Rundläuferpresse 1 ausgebildet. Die Tablettenpresse 1 umfasst eine Auslaufrutsche 2 für durch die Tablettenpresse 1 hergestellte Tabletten.

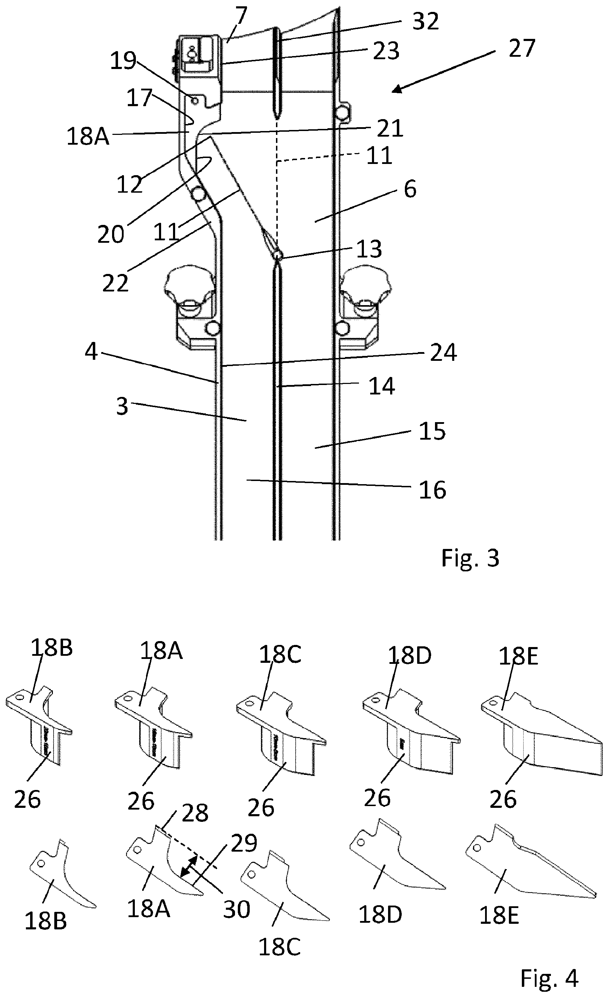

Im Folgenden wird mit Bezug auf die Figuren 2 und 3 die Ausführung der Auslaufrutsche 2 näher erläutert. Hierzu zeigt Figur 2 eine perspektivische Darstellung der Auslaufrutsche 2. Figur 3 zeigt eine Draufsicht auf die Auslaufrutsche 2.

Die Auslaufrutsche 2 umfasst einen Rutschkanal 3. Der Rutschkanal 3 wird durch eine erste Seitenwand 4, eine der ersten Seitenwand 4 gegenüberliegende zweite Seitenwand 5 und einen Boden 6 begrenzt. Zusätzlich wird der Rutschkanal 3 noch durch einen in den Figuren 2 und 3 ausgesparten Deckel begrenzt. Der Boden 6 ist senkrecht zu den beiden Seitenwänden 4 und 5 erstreckt. Vorliegend weist der Rutschkanal 3 einen rechteckigen Querschnitt auf.

Der Rutschkanal 3 umfasst einen Tabletteneinlass 7. Ist der Rutschkanal 3 bestimmungsgemäß in der Tablettenpresse 1 verbaut, so werden durch die Tablettenpresse 1 hergestellte Tabletten durch den Tabletteneinlass 7 dem Rutschkanal 3 zugeführt.

Der Rutschkanal 3 umfasst außerdem wenigstens einen ersten Tablettenauslass 8 und einen zweiten Tablettenauslass 9. Bei dem in den Figuren dargestellten Ausführungsbeispiel ist der erste Tablettenauslass 8 ein Tablettenauslass für Schlechttabletten. Der zweite Tablettenauslass 9 ist ein Tablettenauslass für Guttabletten. Vorliegend ist außerdem ein dritter Tablettenauslass 10 vorhanden. Der dritte Tablettenauslass 10 ist für eine Probeentnahme vorgesehen, also eine Stichprobenuntersuchung von hergestellten Tabletten.

Die Auslaufrutsche 2 umfasst ein Stellelement 11. Das Stellelement 11 ist zwischen einer ersten Endstellung und einer zweiten Endstellung schwenkbar. Die Schwenkachse des Stellelements 11 ist vorliegend senkrecht zu dem Boden 6 erstreckt. Die erste Endstellung und die zweite Endstellung begrenzen den Schwenkweg des Stellelements 11, sodass ein Schwenken des Stellelements 11 über die Endstellungen hinaus gesperrt ist.

Vorzugsweise ist ein in den Figuren nicht dargestelltes erstes Anschlagselement vorhanden, das ein Schwenken des Stellelements 11 über die erste Endstellung hinaus sperrt. Vorzugsweise ist ein in den Figuren nicht dargestelltes zweites Anschlagselement vorhanden, das ein Schwenken des Stellelements 11 über die zweite Endstellung hinaus sperrt.

Vorzugsweise ist das Stellelement 11 mit einer Abtriebswelle eines Drehzylinders einer pneumatischen Antriebseinrichtung mechanisch gekoppelt, wobei die Anschlagselemente die Drehung eines Schwenkflügels in dem Drehzylinder begrenzen.

In den Figuren 2 und 3 nimmt das Stellelement 11 die erste Endstellung ein. In der ersten Endstellung ist das Stellelement 11 schräg zu der Rutschrichtung des Rutschkanals 3 erstreckt. Die Rutschrichtung des Rutschkanals 3 ist die Neigungsrichtung des Bodens 6. Die zweite Endstellung ist in Figur 3 gestrichelt angedeutet. In der zweiten Endstellung ist das Stellelement 11 in Rutschrichtung erstreckt. Wird das Stellelement 11 ausgehend von der ersten Endstellung in die zweite Endstellung geschwenkt, so wird das Stellelement 11 in Richtung der zweiten Seitenwand 5 geschwenkt. Wird das Stellelement 11 ausgehend von der zweiten Endstellung in die erste Endstellung geschwenkt, so wird das Stellelement 11 in Richtung der ersten Seitenwand 4 geschwenkt.

In der ersten Endstellung des Stellelements 11 werden dem Tabletteneinlass 7 zugeführte Tabletten dem ersten Tablettenauslass 8 oder dem dritten Tablettenauslass 10 zugeleitet. In der zweiten Endstellung des Stellelements 11 werden dem Tabletteneinlass 7 zugeführte Tabletten dem zweiten Tablettenauslass 9 zugeleitet.

Vorliegend ist das Stellelement 11 als Weichenfahne 11 ausgebildet, also als klappenförmiges Stellelement 11. Das Stellelement 11 umfasst ein freies erstes Ende 12. Außerdem umfasst das Stellelement 11 ein von dem ersten Ende 12 abgewandtes zweites Ende 13. Die Schwenkachse des Stellelements 11 verläuft im Bereich des zweiten Endes 13 durch das Stellelement 11.

In dem Rutschkanal 3 ist eine Trennwand 14 angeordnet. Die Trennwand 14 ist dem Stellelement 11 nachgeordnet und erstreckt sich in Rutschrichtung des Rutschkanals 3. In der zweiten Endstellung des Stellelements 11 fluchtet die Trennwand 14 mit dem Stellelement 11. Der Rutschkanal 3 wird durch die Trennwand 14 in einen dem ersten Tablettenauslass 8 zugeordneten ersten Rutschkanalteil 15 und einen dem zweiten Tablettenauslass 9 zugeordneten zweiten Rutschkanalteil 16 unterteilt.

Dem Stellelement 11 ist vorliegend außerdem eine weitere Trennwand 32 vorgeordnet. Die weitere Trennwand 32 ist in Rutschrichtung des Rutschkanals 3 erstreckt. Das Stellelement 11 fluchtet in der zweiten Endstellung mit der weiteren Trennwand 32.

Wie zuvor erwähnt, werden in der ersten Endstellung des Stellelements 11 die dem Tabletteneinlass 7 zugeführten Tabletten wahlweise dem ersten Tablettenauslass 8 oder dem dritten Tablettenauslass 10 zugeleitet. Um die Tabletten gezielt dem ersten Tablettenauslass 8 oder dem dritten Tablettenauslass 10 zuzuführen, ist ein weiteres Stellelement 31 vorhanden. Auch das weitere Stellelement 31 ist zwischen einer ersten Endstellung und einer zweiten Endstellung schwenkbar. In der in Figur 2 dargestellten ersten Endstellung ist das weitere Stellelement 31 in Rutschrichtung des Rutschkanals 3 erstreckt. Die Tabletten werden dem ersten Tablettenauslass 8 zugeführt. In der zweiten Endstellung ist das weitere Stellelement 31 schräg zu der Rutschrichtung des Rutschkanals 3 erstreckt. Ein freies erstes Ende des weiteren Stellelements 31 liegt an der Trennwand 14 an. Die Tabletten werden dann dem dritten Tablettenauslass 10 zugeführt.

Wäre die erste Seitenwand 4 durchgehend in Rutschrichtung des Rutschkanals 3 erstreckt, so könnte beim Schwenken des Stellelements 11 in die erste Endstellung eine Tablette zwischen dem Stellelement 11 und der ersten Seitenwand 4 eingeklemmt werden. Es wäre dann ein Spalt zwischen der ersten Seitenwand 4 und dem Stellelement 11 vorhanden, durch welchen Tabletten irrtümlicherweise zu dem zweiten Tablettenauslass 9 gelangen könnten. Solche "Tablettenklemmer" werden durch die nachfolgend beschriebene Ausführung der ersten Seitenwand 4 wirksam vermieden.

Die erste Seitenwand 4 bzw. ein Grundkörper 22 der ersten Seitenwand 4 umfasst auf Höhe des Stellelements 11 eine Aussparung 17. In die Aussparung 17 ist ein Einsetzteil 18A eingesetzt. Das Einsetzteil 18A ist mit der Auslaufrutsche 2 lösbar verbunden. Vorliegend wird die lösbare Verbindung durch einen Befestigungsstift 19 bewirkt, der in eine Durchgangsöffnung des Einsetzteils 18A eingesteckt ist.

Ist das Einsetzteil 18A in die Aussparung 17 eingesetzt, so wird der Rutschkanal 3 im Bereich des Einsetzteils 18A durch eine erste Außenkontur 25 des Einsetzteils 18A begrenzt. Insofern wird die erste Seitenwand 4 durch den Grundkörper 22 der ersten Seitenwand 4 und das eingesetzte Einsetzteil 18A gemeinsam gebildet. Die erste Seitenwand 4 umfasst bei eingesetztem Einsetzteil 18A eine seitliche Vertiefung 20. Eine zweite Außenkontur 26 des Einsetzteils 18A ist komplementär zu dem Grundkörper 22 geformt und schmiegt sich an den Grundkörper 22 an.

Der die Vertiefung 20 bildende Wandabschnitt 21 der ersten Seitenwand 4 wird im Folgenden als erster Wandabschnitt 21 bezeichnet. Vorliegend wird der erste Wandabschnitt 21 anteilig durch das Einsetzteil 18A und anteilig durch den Grundkörper 22 der Seitenwand 4 gebildet.

Dem ersten Wandabschnitt 21 ist ein zweiter Wandabschnitt 23 vorgeordnet. Der zweite Wandabschnitt 23 ist in Rutschrichtung des Rutschkanals 3 erstreckt. Vorliegend wird der zweite Wandabschnitt 23 anteilig durch das Einsetzteil 18A und anteilig durch den Grundkörper 22 der Seitenwand 4 gebildet.

Außerdem ist dem ersten Wandabschnitt 21 ein dritter Wandabschnitt 24 nachgeordnet. Der dritte Wandabschnitt 24 ist in Rutschrichtung des Rutschkanals 3 erstreckt. Vorliegend liegen der zweite Wandabschnitt 23 und der dritte Wandabschnitt 24 in einer gemeinsamen gedachten Ebene.

Wie aus den Figuren 2 und 3 erkenntlich ist, weist das Stellelement 11 in der ersten Endstellung in Richtung der Vertiefung 20. Vorliegend ragt das Stellelement 11 in der ersten Endstellung in die Vertiefung 20 hinein. Das freie erste Ende 12 des Stellelements 11 ist dem durch das Einsetzteil 18A gebildeten Teil des ersten Wandabschnitts 21 zugewandt. Das Einsetzteil 18A erstreckt sich vorliegend bogenförmig entlang des freien Endes 12. Wie aus den Figuren 2 und 3 erkenntlich ist, ist in der ersten Endstellung des Stellelements 11 ein Durchlass zwischen der ersten Seitenwand 4 und dem Stellelement 11 gebildet. Dieser Durchlass ist in jeder Endstellung des Stellelements 11 vorhanden und in jeder Endstellung des Stellelements 11 größer als die Maximalerstreckung der durch die Tablettenpresse 1 hergestellten Tabletten.

Weil der Durchlass in jeder Stellung des Stellelements 11 größer ist als die Maximalerstreckung der hergestellten Tabletten, kann eine einzelne Tablette nicht zwischen dem Stellelement 11 und der ersten Seitenwand 4 eingeklemmt werden. Weil das freie Ende 12 in der ersten Endstellung in die Vertiefung 20 hineinragt, treffen die dem Tabletteneinlass 7 zugeführten Tabletten in der ersten Endstellung des Stellelements 11 nicht auf das freie Ende 12 auf, sondern allenfalls auf einen zwischen dem freien Ende 12 und dem zweiten Ende 13 angeordneten Abschnitt des Stellelements 11.

Bei dem in den Figuren 2 und 3 dargestellten Ausführungsbeispiel bilden die Auslaufrutsche 2 und das Einsetzteil 18A gemeinsam ein Auslaufsystem 27. Das einsetzbare Einsetzteil 18A hat den Vorteil, dass der Verlauf der ersten Seitenwand 4 an die Größe der hergestellten Tabletten angepasst werden kann. Die zuvor beschriebene Verhinderung von Tablettenklemmern kann jedoch auch durch eine einstückige erste Seitenwand 4 realisiert werden. Gemäß einem nicht dargestellten weiteren Ausführungsbeispiel der Auslaufrutsche 2 ist die erste Seitenwand 4 einstückig ausgebildet. Der Verlauf der ersten Seitenwand 4 entspricht dem zuvor mit Bezug auf die Figuren 2 und 3 erläuterten Verlauf der aus dem Grundkörper 22 und dem Einsetzteil 18A zusammengesetzten ersten Seitenwand 4.

Wie zuvor erwähnt, hat das Auslaufsystem 27 mit dem einsetzbaren Einsetzteil 18A den Vorteil, dass der Verlauf der ersten Seitenwand 4 an die Größe der hergestellten Tabletten angepasst werden kann. Dies wird nachfolgend mit Bezug auf die Figuren 4, 5, 6 und 7 näher erläutert.

In Figur 4 sind das Einsetzteil 18A und vier weitere Einsetzteile 18B, 18C, 18D und 18E abgebildet. Dabei ist von jedem der Einsetzteile 18 jeweils eine perspektivische Darstellung und eine Draufsicht gezeigt. In die Aussparung 17 ist wahlweise das Einsetzteil 18A oder eines der weiteren Einsetzteile 18B, 18C, 18D und 18E einsetzbar.

Wie aus Figur 4 erkenntlich ist, unterscheiden sich die Einsetzteile 18 insbesondere im Hinblick auf ihre erste Außenkontur 25. Je nachdem, welches der Einsetzteile 18 in die Aussparung 17 eingesetzt ist, wird also eine erste Seitenwand 4 mit einem jeweils anderen Verlauf erhalten.

Wird eines der Einsetzteile 18A, 18B, 18C und 18D in die Aussparung 17 eingesetzt, so wird der Effekt erzielt, dass in jeder Stellung des Stellelements 11 der Durchlass zwischen dem Stellelement 11 und der ersten Seitenwand 4 gebildet ist, und dass das Stellelement 11 in der ersten Endstellung in die Vertiefung 20 hineinragt. Die Größe des Durchlasses wird dabei durch die erste Außenkontur 25 der Einsetzteile 18 definiert.

So unterscheiden sich die Einsetzteile 18A, 18B, 18C und 18D beispielsweise in der Länge eines ersten Abschnitts 28 der ersten Außenkontur 25, der bei eingesetztem Einsetzteil 18 den zweiten Wandabschnitt 23 der ersten Seitenwand 4 mitbildet. Die erste Außenkontur 25 umfasst außerdem einen zweiten Abschnitt 29, der parallel zu dem ersten Abschnitt 28 erstreckt ist. Bei eingesetztem Einsetzteil 18 bildet der zweite Abschnitt 29 einen Boden der Vertiefung 20.

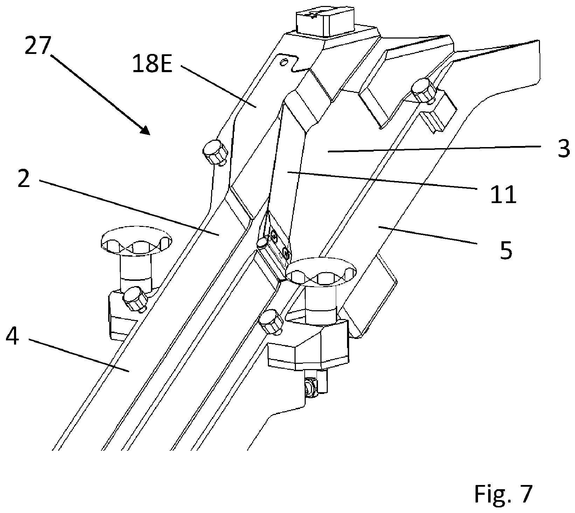

Wie aus Figur 7 erkenntlich ist, unterscheiden sich die Einsetzteile 18A, 18B, 18C und 18D im Hinblick auf den Versatz 30 zwischen dem ersten Abschnitt 28 und dem zweiten Abschnitt 29. Der Versatz 30 zwischen dem ersten Abschnitt 28 und dem zweiten Abschnitt 29 definiert die Tiefe der Vertiefung 20 der ersten Seitenwand 4. Durch eine Verkürzung des ersten Abschnitts 28 und eine Vergrößerung des Versatzes 30 kann die Größe des Durchlasses zwischen dem Stellelement 11 und der ersten Seitenwand 4 gesteigert werden.

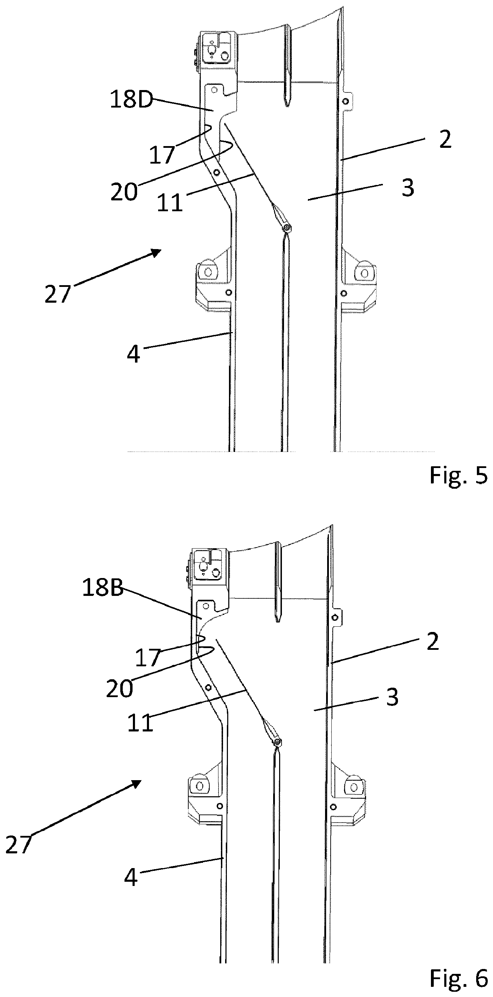

Wie aus Figur 5 erkenntlich ist, führt beispielsweise die Verwendung des weiteren Einsetzteils 18D zu einem kleineren Durchlass als die Verwendung des Einsetzteils 18A. Wie aus Figur 6 erkenntlich ist, führt beispielsweise die Verwendung des weiteren Einsetzteils 18B zu einem größeren Durchlass als die Verwendung des Einsetzteils 18A.

Ist das weitere Einsetzteil 18E in die Aussparung 17 eingesetzt, so liegt das freie Ende 12 des Stellelements 11 in der ersten Endstellung an dem weiteren Einsetzteil 18E an, wie in Figur 7 erkenntlich ist. Bei Verwendung des weiteren Einsetzteils 18E sind Tablettenklemmer zwar nicht ausgeschlossen. Das weitere Einsetzteil 18E ermöglicht es jedoch, mittels des Auslaufsystems 27 die Funktionsweise einer herkömmlichen Auslaufrutsche zu realisieren.

## Patentansprüche

1. Tablettenpresse (1), insbesondere Rundläuferpresse (1), die eingerichtet ist, um Tabletten mit einer vorgegebenen Größe herzustellen, umfassend eine Auslaufrutsche (2) mit einem Rutschkanal (3), der wenigstens einen Tabletteneinlass (7) umfasst, und mit einem Stellelement (11), insbesondere Weichenfahne (11), das zwischen einer ersten Endstellung und einer zweiten Endstellung schwenkbar ist, wobei dem Tabletteneinlass (7) zugeführte Tabletten in der ersten Endstellung des Stellelements (11) wenigstens einem ersten Tablettenauslass (8) des Rutschkanals (3) zugeleitet werden, wobei dem Tabletteneinlass (7) zugeführte Tabletten in der zweiten Endstellung des Stellelements (11) wenigstens einem zweiten Tablettenauslass (9) des Rutschkanals (3) zugeleitet werden, und wobei das Stellelement (11) in der ersten Endstellung in Richtung einer den Rutschkanal (3) begrenzenden ersten Wand (4), insbesondere ersten Seitenwand (4), der Auslaufrutsche (3) weist, **dadurch gekennzeichnet, dass** in jeder Stellung des Stellelements (11) zwischen dem Stellelement (11) und der ersten Wand (4) ein Durchlass gebildet ist, der größer ist als die Maximalerstreckung der durch die Tablettenpresse (1) hergestellten Tabletten.

2. Tablettenpresse (1) nach Anspruch 1, **dadurch gekennzeichnet, dass** das Stellelement (11) in der ersten Endstellung in Richtung einer insbesondere seitlichen Vertiefung (20) der ersten Wand (4) weist, insbesondere wobei die Vertiefung (20) durch einen ersten Wandabschnitt (21) der ersten Wand (4) gebildet ist.

3. Tablettenpresse (1) nach einem der Ansprüche 1 und 2, **dadurch gekennzeichnet, dass** ein Schwenken des Stellelements (11) über die erste Endstellung hinaus durch ein erstes Anschlagselement gesperrt ist, und/oder dass ein Schwenken des Stellelements (11) über die zweite Endstellung hinaus durch ein zweites Anschlagselement gesperrt ist.

4. Tablettenpresse (1) nach einem der Ansprüche 1 bis 3, **dadurch gekennzeichnet, dass** der Durchlass in der ersten Endstellung höchstens 30 mm beträgt, bevorzugt zwischen 20 mm und 30 mm, bevorzugt zwischen 15 mm und 20 mm, bevorzugt zwischen 10 mm und 15 mm, bevorzugt zwischen 5 mm und 10 mm.

5. Tablettenpresse (1) nach einem der Ansprüche 2 bis 4, **dadurch gekennzeichnet, dass** der erste Wandabschnitt (21) wenigstens bereichsweise durch ein Einsetzteil (18A) gebildet ist, welches in eine Aussparung (17) der ersten Wand (4) eingesetzt und mit der Auslaufrutsche (2) lösbar verbunden ist, insbesondere wobei das Einsetzteil (18A) durch eine lösbare Formschlussverbindung und/oder durch wenigstens ein lösbares Befestigungselement mit der Auslaufrutsche (2) verbunden ist.

6. Tablettenpresse (1) nach einem der Ansprüche 1 bis 5, **dadurch gekennzeichnet, dass** sich die erste Wand (4) in der ersten Endstellung des Stellelements (11) bogenförmig entlang eines freien ersten Endes (12) des Stellelements (11) erstreckt.

7. Tablettenpresse (1) nach einem der Ansprüche 2 bis 6, **dadurch gekennzeichnet, dass** ein dem ersten Wandabschnitt (21) vorgeordneter zweiter Wandabschnitt (23) der ersten Wand (4) in Rutschrichtung der Auslaufrutsche (2) erstreckt ist, und/oder dass ein dem ersten Wandabschnitt (21) nachgeordneter dritter Wandabschnitt (24) der ersten Wand (4) in Rutschrichtung der Auslaufrutsche (2) erstreckt ist, insbesondere wobei der zweite Wandabschnitt (23) und der dritte Wandabschnitt (24) in einer gemeinsamen gedachten Ebene liegen.

8. Tablettenpresse (1) nach Anspruch 7, wenn abhängig von Anspruch 5, **dadurch gekennzeichnet, dass** der zweite Wandabschnitt (23) wenigstens bereichsweise durch das Einsetzteil (18A) gebildet ist.

9. Tablettenpresse (1) nach einem der Ansprüche 1 bis 8, **dadurch gekennzeichnet, dass** der Rutschkanal (3) durch eine dem Stellelement (11) nachgeordnete Trennwand (14) in einen dem ersten Tablettenauslass (8) zugeordneten ersten Rutschkanalteil (15) und einen dem zweiten Tablettenauslass (9) zugeordneten zweiten Rutschkanalteil (16) unterteilt ist, insbesondere wobei ein Durchlass zwischen dem Stellelement (11) und der Trennwand (14) in jeder Stellung des Stellelements (11) kleiner ist als die Minimalgröße der durch die Tablettenpresse (11) hergestellten Tabletten.

10. Tablettenpresse (1) nach einem der Ansprüche 1 bis 9, **dadurch gekennzeichnet, dass** sie einen senkrecht zu der ersten Wand (4) erstreckten Boden (6) umfasst.

11. Tablettenpresse (1) nach einem der Ansprüche 1 bis 10, **dadurch gekennzeichnet, dass** der Rutschkanal (3) einen dritten Tablettenauslass (10) umfasst, wobei dem Tabletteneinlass (7) zugeführte Tabletten in der ersten Endstellung wahlweise dem ersten Tablettenauslass (8) oder dem dritten Tablettenauslass (10) zugeleitet werden, und/oder wobei dem Tabletteneinlass (7) zugeführte Tabletten in der zweiten Endstellung wahlweise dem zweiten Tablettenauslass (9) oder dem dritten Tablettenauslass (10) zugeleitet werden.

12. Auslaufsystem (27) für eine Tablettenpresse (1), insbesondere Rundläuferpresse (1), mit einer Auslaufrutsche (2) umfassend einen Rutschkanal (3) mit wenigstens einem Tabletteneinlass (7) und ein Stellelement (11), insbesondere Weichenfahne (11), das zwischen einer ersten Endstellung und einer zweiten Endstellung schwenkbar ist, wobei dem Tabletteneinlass (7) zugeführte Tabletten in der ersten Endstellung des Stellelements (11) wenigstens einem ersten Tablettenauslass (8) des Rutschkanals (3) zugeleitet werden, wobei dem Tabletteneinlass (7) zugeführte Tabletten in der zweiten Endstellung des Stellelements (11) wenigstens einem zweiten Tablettenauslass (9) des Rutschkanals (3) zugeleitet werden, **dadurch gekennzeichnet, dass** eine den Rutschkanal (3) begrenzende erste Wand (4), insbesondere erste Seitenwand (4), der Auslaufrutsche (3) eine Aussparung (17) umfasst, und mit wenigstens einem in die Aussparung (17) einsetzbaren Einsetzteil (18A), wobei das in die Aussparung (17) eingesetzte Einsetzteil (18A) die erste Wand (4) mitbildet, wobei das Stellelement (11) in der ersten Endstellung in Richtung des eingesetzten Einsetzteils (18A) weist, und wobei bei eingesetztem Einsetzteil (18A) in jeder Stellung des Stellelements (11) ein Durchlass zwischen dem Stellelement (11) und der ersten Wand (4) gebildet ist, insbesondere wobei der Durchlass bei eingesetztem Einsetzteil (18A) in der ersten Endstellung des Stellelements (11) höchstens 30 mm beträgt, bevorzugt 20 mm bis 30 mm, bevorzugt 15 mm bis 20 mm, bevorzugt 10 mm bis 15 mm, bevorzugt 5 mm bis 10 mm.

13. Auslaufsystem (27) nach Anspruch 12, **dadurch gekennzeichnet, dass** es wenigstens ein weiteres Einsetzteil (18B,18C,18D,18E) umfasst, wobei wahlweise das Einsetzteil (18A) oder das weitere Einsetzteil (18B,18C,18D,18E) in die Aussparung (17) einsetzbar ist, und wobei der Durchlass zwischen dem Stellelement (11) und der ersten Wand (4) bei eingesetztem Einsetzteil (18A) anders ist als bei eingesetztem weiteren Einsetzteil (18B,18C,18D,18E).

14. Auslaufsystem (27) nach Anspruch 13, **dadurch gekennzeichnet, dass** es ein weiteres Einsetzteil (18E) umfasst, das derart ausgebildet ist, dass bei eingesetztem weiteren Einsetzteil (18E) das Stellelement (11) in der ersten Endstellung an dem eingesetzten weiteren Einsetzteil (18E) anliegt.

15. Tablettenpresse (1), insbesondere Rundläuferpresse (1), die eingerichtet ist, um Tabletten mit einer vorgegebenen Größe herzustellen, umfassend ein Auslaufsystem (27) gemäß einem der Ansprüche 12 bis 14.

## Claims

1. Tablet press (1), in particular rotary press (1), which is configured to produce tablets of a predetermined size, the press comprising a discharge chute (2) having a chute channel (3) which comprises at least one tablet inlet (7), and having an adjusting element (11), in particular a switching tab (11), which is pivotable between a first end position and a second end position, with tablets supplied to the tablet inlet (7) being directed to at least a first tablet outlet (8) of the chute channel (3) in the first end position of the adjusting element (11), and with tablets supplied to the tablet inlet (7) being directed to at least a second tablet outlet (9) of the chute channel (3) in the second end position of the adjusting element (11), and the adjusting element (11) in the first end position pointing toward a first wall (4), in particular a first side wall (4), of the discharge chute (3) that delimits the chute channel (3), **characterized in that,** in each position of the adjusting element (11), a passage is formed between the adjusting element (11) and the first wall (4) that is larger than the maximum extent of the tablets produced by the tablet press (1).

2. Tablet press (1) according to claim 1, **characterized in that** the adjusting element (11) in the first end position points toward an in particular lateral indentation (20) in the first wall (4), in particular the indentation (20) being formed by a first wall portion (21) of the first wall (4).

3. Tablet press (1) according to either of claims 1 and 2, **characterized in that** the adjusting element (11) is blocked from pivoting beyond the first end position by means of a first stop element, **and/or in that** the adjusting element (11) is blocked from pivoting beyond the second end position by means of a second stop element.

4. Tablet press (1) according to any of claims 1 to 3, **characterized in that** the passage in the first end position is at most 30 mm, preferably between 20 mm and 30 mm, preferably between 15 mm and 20 mm, preferably between 10 mm and 15 mm, preferably between 5 mm and 10 mm.

5. Tablet press (1) according to any of claims 2 to 4, **characterized in that** the first wall portion (21) is formed at least partially by an insert part (18A) which is inserted into a recess (17) in the first wall (4) and is detachably connected to the discharge chute (2), in particular the insert part (18A) being connected to the discharge chute (2) by means of a detachable form-fitting connection and/or by means of at least one detachable attachment element.

6. Tablet press (1) according to any of claims 1 to 5, **characterized in that** the first wall (4) extends in an arc shape along a free first end (12) of the adjusting element (11) in the first end position of the adjusting element (11).

7. Tablet press (1) according to any of claims 2 to 6, **characterized in that** a second wall portion (23) of the first wall (4) arranged upstream of the first wall portion (21) extends in the chute direction of the discharge chute (2), **and/or in that** a third wall portion (24) of the first wall (4) arranged downstream of the first wall portion (21) extends in the chute direction of the discharge chute (2), in particular the second wall portion (23) and the third wall portion (24) being in a common imaginary plane.

8. Tablet press (1) according to claim 7, when dependent on claim 5,
**characterized in that** the second wall portion (23) is formed at least partially by the insert part (18A).

9. Tablet press (1) according to any of claims 1 to 8, **characterized in that** the chute channel (3) is divided, by means of a partition (14) arranged downstream of the adjusting element (11), into a first chute channel part (15) associated with the first tablet outlet (8) and a second chute channel part (16) associated with the second tablet outlet (9), in particular a passage between the adjusting element (11) and the partition (14) being smaller than the minimum size of the tablets produced by the tablet press (11) in each position of the adjusting element (11).

10. Tablet press (1) according to any of claims 1 to 9, **characterized in that** it comprises a floor (6) which extends perpendicularly to the first wall (4).

11. Tablet press (1) according to any of claims 1 to 10,
**characterized in that** the chute channel (3) comprises a third tablet outlet (10), with tablets supplied to the tablet inlet (7) being directed to either the first tablet outlet (8) or the third tablet outlet (10) in the first end position, and/or with tablets supplied to the tablet inlet (7) being directed to either the second tablet outlet (9) or the third tablet outlet (10) in the second end position.

12. Discharge system (27) for a tablet press (1), in particular a rotary press (1), having a discharge chute (2) comprising a chute channel (3) having at least one tablet inlet (7), and comprising an adjusting element (11), in particular a switching tab (11), which is pivotable between a first end position and a second end position, with tablets supplied to the tablet inlet (7) being directed to at least a first tablet outlet (8) of the chute channel (3) in the first end position of the adjusting element (11), and with tablets supplied to the tablet inlet (7) being directed to at least a second tablet outlet (9) of the chute channel (3) in the second end position of the adjusting element (11), **characterized in that** a first wall (4), in particular a first side wall (4), of the discharge chute (3) that delimits the chute channel (3) comprises a recess (17), and having at least one insert part (18A) which can be inserted into the recess (17), the insert part (18A) inserted into the recess (17) partly forming the first wall (4), the adjusting element (11) pointing toward the inserted insert part (18A) in the first end position, and a passage being formed between the adjusting element (11) and the first wall (4) in each position of the adjusting element (11) when the insert part (18A) is inserted, in particular the passage being at most 30 mm, preferably 20 mm to 30 mm, preferably 15 mm to 20 mm, preferably 10 mm to 15 mm, preferably 5 mm to 10 mm, when the insert part (18A) is inserted.

13. Discharge system (27) according to claim 12, **characterized in that** it comprises at least one further insert part (18B,18C,18D,18E), with it being possible for either the insert part (18A) or the further insert part (18B, 18C, 18D, 18E) to be inserted into the recess (17), and the passage between the adjusting element (11) and the first wall (4) being different when the insert part (18A) is inserted than when the further insert part (18B, 18C, 18D, 18E) is inserted.

14. Discharge system (27) according to claim 13, **characterized in that** it comprises a further insert part (18E) which is designed such that the adjusting element (11) abuts the inserted further insert part (18E) in the first end position when the further insert part (18E) is inserted.

15. Tablet press (1), in particular rotary press (1), which is configured to produce tablets of a predetermined size and comprises a discharge system (27) according to any of claims 12 to 14.

## Revendications

1. Presse à comprimés (1), en particulier pastilleuse rotative (1), conçue pour fabriquer des comprimés d'une taille prédéfinie, comprenant une goulotte d'évacuation (2) comportant d'un canal de glissement (3), lequel comprend au moins une entrée pour comprimés (7), et comportant un élément de réglage (11), en particulier un fanion d'aiguillage (11), qui peut pivoter entre une première position finale et une seconde position finale, dans laquelle les comprimés amenés à l'entrée pour comprimés (7) sont acheminés, dans la première position finale de l'élément de réglage (11), vers au moins une première sortie pour comprimés (8) du canal de glissement (3), dans laquelle les comprimés amenés à l'entrée pour comprimés (7) sont acheminés, dans la seconde position finale de l'élément de réglage (11), vers au moins une deuxième sortie pour comprimés (9) du canal de glissement (3), et dans laquelle l'élément de réglage (11) est orienté, dans la première position finale, en direction d'une première paroi (4), en particulier d'une première paroi latérale (4), délimitant le canal de glissement (3), de la goulotte d'évacuation (3), **caractérisée en ce que,** dans chaque position de l'élément de réglage (11), un passage est formé entre l'élément de réglage (11) et la première paroi (4), lequel passage est plus grand que l'étendue maximale des comprimés fabriqués par la presse à comprimés (1).

2. Presse à comprimés (1) selon la revendication 1, **caractérisée en ce que** l'élément de réglage (11) est orienté, dans la première position finale, en direction d'un renfoncement (20), en particulier latéral, de la première paroi (4), en particulier dans laquelle le renfoncement (20) est formé par une première section de paroi (21) de la première paroi (4).

3. Presse à comprimés (1) selon l'une des revendications 1 et 2,
**caractérisée en ce qu'**un pivotement de l'élément de réglage (11) au-delà de la première position finale est bloqué par un premier élément formant butée,
**et/ou en ce qu'**un pivotement de l'élément de réglage (11) au-delà de la seconde position finale est bloqué par un second élément formant butée.

4. Presse à comprimés (1) selon l'une des revendications 1 à 3,
**caractérisée en ce que** le passage est, dans la première position finale, au plus de 30 mm, de préférence compris entre 20 mm et 30 mm, de préférence entre 15 mm et 20 mm, de préférence entre 10 mm et 15 mm, de préférence entre 5 mm et 10 mm.

5. Presse à comprimés (1) selon l'une des revendications 2 à 4,
**caractérisée en ce que** la première section de paroi (21) est formée, au moins dans certaines zones, par une pièce d'insertion (18A) qui est insérée dans un évidement (17) de la première paroi (4) et est reliée de manière amovible à la goulotte d'évacuation (2), en particulier dans laquelle la pièce d'insertion (18A) est reliée à la goulotte d'évacuation (2) par une liaison par complémentarité de forme amovible et/ou par au moins un élément de fixation amovible.

6. Presse à comprimés (1) selon l'une des revendications 1 à 5,
**caractérisée en ce que** la première paroi (4) s'étend, dans la première position finale de l'élément de réglage (11), en forme d'arc le long d'une première extrémité libre (12) de l'élément de réglage (11).

7. Presse à comprimés (1) selon l'une des revendications 2 à 6,
**caractérisée en ce qu'**une deuxième section de paroi (23) de la première paroi (4), située en amont de la première section de paroi (21), s'étend dans la direction de glissement de la goulotte d'évacuation (2), **et/ou en ce qu'**une troisième section de paroi (24) de la première paroi (4), située en aval de la première section de paroi (21), s'étend dans la direction de glissement de la goulotte d'évacuation (2), en particulier dans laquelle la deuxième section de paroi (23) et la troisième section de paroi (24) se trouvent dans un plan imaginaire commun.

8. Presse à comprimés (1) selon la revendication 7, en cas de dépendance à la revendication 5, **caractérisée en ce que** la deuxième section de paroi (23) est formée, au moins dans certaines zones, par la pièce d'insertion (18A).

9. Presse à comprimés (1) selon l'une des revendications 1 à 8,
**caractérisée en ce que** le canal de glissement (3) est divisé par une paroi de séparation (14), située en aval de l'élément de réglage (11), en une première partie de canal de glissement (15) associée à la première sortie pour comprimés (8) et en une seconde partie de canal de glissement (16) associée à la deuxième sortie pour comprimés (9), en particulier dans laquelle un passage entre l'élément de réglage (11) et la paroi de séparation (14) est, dans chaque position de l'élément de réglage (11), plus petit que la taille minimale des comprimés fabriqués par la presse à comprimés (11).

10. Presse à comprimés (1) selon l'une des revendications 1 à 9,
**caractérisée en ce qu'**elle comprend un fond (6) s'étendant perpendiculairement à la première paroi (4).

11. Presse à comprimés (1) selon l'une des revendications 1 à 10,
**caractérisée en ce que** le canal de glissement (3) comprend une troisième sortie pour comprimés (10), dans laquelle les comprimés amenés à l'entrée pour comprimés (7) sont acheminés, dans la première position finale, au choix vers la première sortie pour comprimés (8) ou vers la troisième sortie pour comprimés (10), et/ou dans laquelle les comprimés amenés à l'entrée pour comprimés (7) sont acheminés, dans la seconde position finale, au choix vers la deuxième sortie pour comprimés (9) ou vers la troisième sortie pour comprimés (10).

12. Système d'évacuation (27) pour une presse à comprimés (1), en particulier une pastilleuse rotative (1), comportant une goulotte d'évacuation (2) comprenant un canal de glissement (3) comportant au moins une entrée pour comprimés (7) et un élément de réglage (11), en particulier un fanion d'aiguillage (11), qui peut pivoter entre une première position finale et une seconde position finale, dans lequel les comprimés amenés à l'entrée pour comprimés (7) sont acheminés, dans la première position finale de l'élément de réglage (11), vers au moins une première sortie pour comprimés (8) du canal de glissement (3), dans lequel les comprimés amenés à l'entrée pour comprimés (7) sont acheminés, dans la seconde position finale de l'élément de réglage (11), vers au moins une deuxième sortie pour comprimés (9) du canal de glissement (3), **caractérisé en ce qu'**une première paroi (4), en particulier une première paroi latérale (4), délimitant le canal de glissement (3), de la goulotte d'évacuation (3) comprend un évidement (17), et comportant au moins une pièce d'insertion (18A) pouvant être insérée dans l'évidement (17), dans lequel la pièce d'insertion (18A) insérée dans l'évidement (17) forme la première paroi (4), dans lequel l'élément de réglage (11) est orienté, dans la première position finale, en direction de la pièce d'insertion (18A) inséré, et dans lequel un passage est formé, lorsque la pièce d'insertion (18A) est insérée dans chaque position de l'élément de réglage (11), entre l'élément de réglage (11) et la première paroi (4), en particulier dans lequel le passage est, lorsque la pièce d'insertion (18A) est insérée dans la première position finale de l'élément de réglage (11), au plus de 30 mm, de préférence de 20 mm à 30 mm, de préférence de 15 mm à 20 mm, de préférence de 10 mm à 15 mm, de préférence de 5 mm à 10 mm.

13. Système d'évacuation (27) selon la revendication 12,
**caractérisé en ce qu'**il comprend au moins une autre pièce d'insertion (18B, 18C, 18D, 18E), dans lequel la pièce d'insertion (18A) ou l'autre pièce d'insertion (18B, 18C, 18D, 18E) peut être insérée dans l'évidement (17), et dans lequel le passage entre l'élément de réglage (11) et la première paroi (4), lorsque la pièce d'insertion (18A) est insérée, est différent de celui obtenu lorsque l'autre pièce d'insertion (18B, 18C, 18D, 18E) est insérée.

14. Système d'évacuation (27) selon la revendication 13, **caractérisé en ce qu'**il comprend une autre pièce d'insertion (18E) qui est réalisée de telle sorte que, lorsque l'autre pièce d'insertion (18E) est insérée, l'élément de réglage (11) repose, dans la première position finale, contre l'autre pièce d'insertion (18E) insérée.

15. Presse à comprimés (1), en particulier pastilleuse rotative (1), conçue pour fabriquer des comprimés d'une taille prédéfinie, comprenant un système d'évacuation (27) selon l'une des revendications 12 à 14.
